# EUROPÄISCHE PATENTSCHRIFT

(11) **EP 3 038 894 B1**
(45) Veröffentlichungstag und Bekanntmachung des Hinweises auf die Patenterteilung: **01.07.2020**
(21) Anmeldenummer: 14752627.1
(22) Anmeldetag: 18.08.2014
(51) Int. Cl.: B63B 19/02, E06B 3/66, E06B 3/663

(54) **GLASSCHEIBENMODULEINHEIT**
GLAZING MODULE UNIT
ENSEMBLE VITRAGE MODULAIRE

(30) Priorität: 30.08.2013 DE 202013103938 U
(43) Veröffentlichungstag der Anmeldung: 06.07.2016
(73) Patentinhaber: TILSE Industrie- und Schiffstechnik GmbH, 22529 Hamburg (DE)
(72) Erfinder: TILSE, Hans-Joachim, 22529 Hamburg (DE)
(74) Vertreter: RGTH
(86) Internationale Anmeldenummer: PCT/EP2014/067566
(87) Internationale Veröffentlichungsnummer: WO 2015/028333

(56) Entgegenhaltungen:
- EP-A1- 2 199 074
- BE-A- 495 724
- DE-U1-202005 016 189
- DE-U1-202011 051 103
- FR-A1- 2 578 575

## Beschreibung

Die vorliegende Erfindung betrifft eine Glasscheibenmoduleinheit zum Einsatz in einem Wasserfahrzeug, wie einem Schiff, einem Kreuzer, einer Yacht, einem Boot oder dergleichen.

### Stand der Technik

In Wasserfahrzeugen eingesetzte Fenster, insbesondere Fenster im Rumpfbereich eines Wasserfahrzeuges, weisen meist eine außenseitig des Wasserfahrzeugs angeordnete Verglasung in Form einer Glasscheibe auf, die von innen in einem Rahmen, welcher in der Wasserfahrzeugkonstruktion eingeschraubt oder eingeschweißt sein kann, mittels eines Vorschraubrahmens eingeklemmt werden. Um zudem zu verhindern, dass bei einer Beschädigung des Fensters bzw. der Verglasung Wasser in den Innenraum des Wasserfahrzeugs eindringen kann, ist es aus Sicherheitsgründen gefordert, dass innenseitig des Wasserfahrzeugs vor dem Fenster bzw. der Verglasung zusätzlich eine Blende vorgesehen ist, die entweder schwenkbar montiert ist oder lose als Schraubblende gelagert ist und bei Bedarf aufgeschraubt werden kann. Durch die Anordnung der Blende wird die Ästhetik im Innenbereich des Wasserfahrzeugs jedoch stark gestört. Zudem weist die Blende ein hohes Gewicht auf, wodurch die Handhabung der Blende erschwert wird.

Aus DE 20 2011 051 103 U1 ist eine Glasscheibenanordnung für ein Wasserfahrzeug bekannt, welche über eine Innenverglasung und eine Außenverglasung verfügt, welche jeweils Brandschutzanforderungen genügen.

Weiterhin ist in EP 2 109 074 A1 eine Glasscheibenanordnung zum Schutz vor Feuer beschrieben, welche aus einer 1. Glasscheibe und einer 2. Glasscheibe besteht, welche Abstände zueinander angeordnet sind. Die 2. Glasscheibe ist aus mehreren Einzelglasscheiben zusammengesetzt. Die Glasscheiben weisen eine Verstärkung auf und sind druckresistent.

Die FR 2 578 575 A1 offenbart eine eingekapselte Mehrfachscheibenanordnung, welche gebildet wird, indem mindestens zwei mit Abstand zueinander angeordnete Scheiben aus einem Verglasungsmaterial ausgerichtet zueinander positioniert werden, wobei der Abstand durch ein geeignetes Abstandselement gebildet wird, das an den Umfangsbereichen der sich gegenüberstehenden Flächen der Scheiben angeordnet ist.

Aus der DE 20 2005 016 189 U1 ist eine durchschusshemmende Isolierglasscheibe mit einem gasgefüllten Zwischenraum, einer unmittelbar vor dem Zwischenraum angeordneten Außenglasscheibe, einer unmittelbar hinter dem Zwischenraum angeordneten Innenglasscheibe und einem entlang eines äußeren Randes des Zwischenraums angeordneten Abstandhalter bekannt. Der Abstandshalter dichtet den Zwischenraum gegenüber einer Umgebung hermetisch ab und verbindet die Außenglasscheibe fest mit der Innenglasscheibe. Eine Splitterschutzfolie ist auf einer an den Zwischenraum grenzenden Innenseite der Außenglasscheibe angeordnet ist.

### Darstellung der Erfindung: Aufgabe, Lösung, Vorteile

Es ist daher die Aufgabe der vorliegenden Erfindung, eine Glasscheibenmoduleinheit zur Verfügung zu stellen, welche sich durch eine hohe Widerstandskraft gegen Beschädigungen auszeichnet und mit welcher zudem der ästhetische Eindruck im Innenbereich des Wasserfahrzeuges erhöht werden kann.

Diese Aufgabe wird mit den Merkmalen des Anspruchs 1 gelöst. Vorteilhafte Weiterbildungen der Erfindung sind in den abhängigen Ansprüchen angegeben.

Die Erfindung zeichnet sich durch das Vorsehen einer Glasscheibenmoduleinheit aus, welche in ein Wasserfahrzeug einsetzbar ist, wobei die Glasscheibenmoduleinheit mindestens zwei Sicherheitsgläser, wobei mindestens ein Sicherheitsglas außenseitig des Wasserfahrzeugs anordbar ist und mindestens ein Sicherheitsglas innenseitig des Wasserfahrzeugs anordbar ist, und mindestens einen zwischen zwei benachbart angeordneten Sicherheitsgläsern angeordneten Abstandshalter aufweist, wobei das außenseitig des Wasserfahrzeugs angeordnete Sicherheitsglas Sicherheitseigenschaften aufweist, welche sich von den Sicherheitseigenschaften des innenseitig des Wasserfahrzeugs angeordneten Sicherheitsglases unterscheiden, wobei das außenseitig des Wasserfahrzeugs angeordnete Sicherheitsglas Sicherheitseigenschaften gegen hydrostatische Belastungen aufweist und wobei das innenseitig des Wasserfahrzeugs angeordnete Sicherheitsglas Sicherheitseigenschaften gegen Aufschlagbelastungen aufweist, wobei zwischen zwei benachbart angeordneten Sicherheitsgläsern mindestens ein Verstärkungselement angeordnet ist, wobei das Verstärkungselement aus einem Metallmaterial oder einem Karbonmaterial ausgebildet ist,wobei das Verstärkungselement als ein zu dem Abstandshalter separat angeordnetes Element zwischen zwei Abstandshaltern angeordnet ist, so dass kein direkter Kontakt zwischen dem Verstärkungselement und den Sicherheitsgläsern ausgebildet ist.

Gegenüber herkömmlichen in Wasserfahrzeugen eingesetzten Fenstern bzw. Verglasungen zeichnet sich die erfindungsgemäße Lösung insbesondere dadurch aus, dass nunmehr eine Glasscheibenmoduleinheit vorgesehen ist, welche als Ganzes, d. h. als vorgefertigtes bzw. vormontiertes Modul, in das Wasserfahrzeug eingebaut werden kann, um ein entsprechendes Fenster in einem Wasserfahrzeug auszubilden. Einzelne Glasscheiben müssen daher bei der erfindungsgemäßen Lösung nicht mehr in ein Wasserfahrzeug eingebaut werden, so dass der Aufwand beim Einbau wesentlich reduziert werden kann. Die Glasscheibenmoduleinheit kann beispielsweise über einen Rahmen von innen in das Wasserfahrzeug eingebaut werden. Weiter ist es auch möglich, die Glasscheibenmoduleinheit unmittelbar in eine entsprechende in dem Wasserfahrzeug vorgesehene Öffnung, vorzugsweise mit einem Flansch von außen, einzukleben.

Die Glasscheibenmoduleinheit weist mindestens zwei Sicherheitsgläser auf, welche parallel, mit einem bestimmten Abstand zueinander angeordnet sind. Für die Glasscheibenmoduleinheit werden somit keine normalen Glasscheiben verwendet, sondern Sicherheitsgläser, welche sich in ihrem strukturellen Aufbau von normalen Glasscheiben insbesondere dadurch unterscheiden, dass sie thermisch oder chemisch vorgespannt sind und dadurch höheren Belastungen standhalten können als normale Glasscheiben. Der Abstand der Sicherheitsgläser zueinander wird durch mindestens einen, zwischen zwei benachbart angeordneten Sicherheitsgläsern angeordneten Abstandshalter bestimmt, wobei insbesondere während der Montage der Glasscheibenmoduleinheit mittels des Abstandshalters der Abstand zwischen zwei benachbart angeordneten Sicherheitsgläsern gewährleistet werden kann. Der Abstandshalter kann beispielsweise rahmenartig ausgebildet sein und randseitig umlaufend auf den Sicherheitsgläsern befestigt sein. Es ist aber auch möglich, dass zwei oder mehr einzelne Abstandshalter zwischen jeweils zwei benachbart angeordneten Sicherheitsgläsern angeordnet sind.

Die Sicherheitsgläser innerhalb einer Glasscheibenmoduleinheit unterscheiden sich in ihren Sicherheitseigenschaften voneinander, wobei die Sicherheitsgläser entsprechend der Sicherheitsanforderungen außenseitig und innenseitig des Wasserfahrzeugs individuell ausgewählt werden können. Durch die Verwendung von zwei oder mehr Sicherheitsgläsern in einer Glasscheibenmoduleinheit, wobei die Sicherheitseigenschaften der Sicherheitsgläser außenseitig und innenseitig individuell gewählt bzw. auf die besonderen Beanspruchungen bzw. Belastungen außenseitig und innenseitig abgestimmt sein können, zeichnet sich die Glasscheibenmoduleinheit durch eine hohe Widerstandskraft gegen Beschädigungen aus, wobei diese Widerstandskraft derart hoch ist, dass bei dem Einbau der erfindungsgemäßen Glasscheibenmoduleinheit als ein Fenster in einem Wasserfahrzeug keine zusätzlichen Blenden oder Vorschraubrahmen mehr vorgesehen werden müssen, wodurch gleichzeitig der ästhetische Eindruck im Innenbereich des Wasserfahrzeuges wesentlich erhöht werden kann.

Dabei ist es vorgesehen, dass das außenseitig des Wasserfahrzeugs angeordnete Sicherheitsglas Sicherheitseigenschaften gegen hydrostatische Belastungen aufweist und dass das innenseitig des Wasserfahrzeugs angeordnete Sicherheitsglas Sicherheitseigenschaften gegen Aufschlagbelastungen aufweist. Das außenseitig positionierte Sicherheitsglas weist somit vorzugsweise einen Aufbau auf, der eine besonders hohe Festigkeit gegenüber Wasserdruck und Wellenschlag ausbildet. Das innenseitig positionierte Sicherheitsglas weist hingegen vorzugsweise einen Aufbau auf, der eine besonders hohe Festigkeit gegenüber Belastungen durch gegen das Sicherheitsglas schwimmende Gegenstände, wie beispielsweise Holzbalken oder -stämmen, ausbildet. Die Glasscheibenmoduleinheit zeichnet sich dadurch durch eine besonders hohe Sicherheit gegenüber Druck- und Schlagbelastungen aus. Sollte es dennoch durch besonders hohe hydrostatische Belastungen zu einem Bruch des außenseitig angeordneten Sicherheitsglases kommen, wird durch den speziellen Aufbau der Sicherheitsgläser der Glasscheibenmoduleinheit erreicht, dass das innenseitig angeordnete Sicherheitsglas nicht mit bricht, sondern weiter den möglichen Schlag- bzw. Aufschlagbelastungen, beispielsweise durch herumschwimmende Gegenstände, standhalten kann.

Die Sicherheitsgläser können als ein Einscheibensicherheitsglas oder als ein Sicherheitsverbundglas ausgebildet sein. Ein Einscheibensicherheitsglas (ESG) ist aus einer einzigen, speziell wärmebehandelten Glasscheibe ausgebildet, wobei durch die spezielle Wärmebehandlung das Glas eine erhöhte Stoß- und Schlagfestigkeit im Vergleich zu normalen Glas aufweist. Das Sicherheitsverbundglas (VSG) weist zwei oder mehr vorzugsweise thermisch oder chemisch behandelte Glasscheiben auf, wobei jeweils zwischen zwei Glasscheiben eine Gießharzschicht oder eine reißfeste und zähelastische Folie, beispielsweise aus Polyvinylbutyral (PVB) oder Ethylenvinylacetat (EVA), angeordnet ist. Das Gießharz bzw. die Folie verhindert bei einem Bruch einer der Glasscheiben ein Durchdringen des Glases, wobei bei einem Bruch einer Glasscheibe die Splitter gebunden werden und auch bei einer Teilzerstörung des Glases aufgrund des Gießharzes bzw. der Folie das Glas noch eine Schutzwirkung ausbilden kann.

Der Abstandshalter weist vorzugsweise ein Trockenmittelmaterial auf. Mittels des Trockenmittelmaterials in dem Abstandshalter kann erreicht werden, dass der Abstandshalter zusätzlich zu seiner Funktion, den Abstand zwischen den Sicherheitsgläsern, insbesondere während der Montage der Glasscheibenmoduleinheit, zu gewährleisten, Feuchtigkeit adsorbieren, d. h. einlagern, kann, und damit verhindern kann, dass sich Feuchtigkeit unmittelbar in den Freiraum zwischen den zwei Sicherheitsgläsern, zwischen welchen er angeordnet ist, einlagern kann. Als Trockenmittelmaterial kann beispielsweise Kieselgel eingesetzt werden.

Um die Stabilität der Glasscheibenmoduleinheit weiter zu erhöhen, ist es ferner vorgesehen, dass zwischen zwei benachbart angeordneten Sicherheitsgläsern mindestens ein Verstärkungselement angeordnet ist, wobei das Verstärkungselement in den Abstandshalter integriert ist oder wobei das Verstärkungselement als ein zu dem Abstandshalter separat angeordnetes Element zwischen zwei Abstandshaltern angeordnet ist. Zusätzlich zu dem Abstandshalter kann das Verstärkungselement die Sicherheit erhöhen, dass der Abstand zwischen zwei Sicherheitsgläsern einer Glasscheibenmoduleinheit sich zum einen während der Montage der Glasscheibenmoduleinheit nicht verändert, aber auch dass bei einem Bruch des außenseitig angeordneten Sicherheitsglases ein genügend großer Abstand ist, so dass das innenseitig angeordnete Sicherheitsglas nicht bei einem Brechen des außenseitig angeordneten Sicherheitsglases mit beschädigt wird. Zwischen zwei benachbart angeordneten Sicherheitsgläsern kann ein Verstärkungselement angeordnet sein, welches dann vorzugsweise umlaufend ausgebildet ist und eine Rahmen- oder Ringform aufweist. Es können aber auch zwei oder mehr Verstärkungselemente über eine Fläche verteilt zwischen den zwei Sicherheitsgläsern angeordnet sein, welche als einzelne Blöcke oder auch rahmen- oder ringförmig ausgebildet sein können.

Das Verstärkungselement ist vorzugsweise aus einem hochfesten Material ausgebildet. Beispielsweise kann das Verstärkungselement aus einem Edelstahlmaterial ausgebildet sein. Andere hochfeste Materialien können jedoch auch eingesetzt werden.

Das Verstärkungselement kann in einer nicht von der Erfindung umfassten Ausführungsform in dem Abstandshalter integriert sein, indem das Verstärkungselement in dem Abstandshalter eingebettet ist und damit vollständig von dem Abstandshalter umschlossen ist. Dadurch kann erreicht werden, dass das Verstärkungselement die Stabilität des Abstandshalters erhöht. Zudem kann dadurch die Anzahl der einzeln zwischen zwei Sicherheitsgläsern der Glasscheibenmoduleinheit anzuordnenden Elemente reduziert werden, so dass die Herstellung bzw. der Zusammenbau der Glasscheibenmoduleinheit einfacher und zeitreduzierter erfolgen kann.

Erfindungsgemäß ist vorgesehen, dass das Verstärkungselement als ein zu dem Abstandshalter separat angeordnetes Element zwischen zwei Abstandshaltern angeordnet ist. Das Verstärkungselement ist dann vorzugsweise unmittelbar benachbart zu einem oder mehreren Abstandshaltern angeordnet.

Zwischen zwei benachbart angeordneten Sicherheitsgläsern ist vorzugsweise mindestens eine Kleberschicht ausgebildet. Die Kleberschicht dient vorzugsweise dazu den Abstandshalter und eventuell das Verstärkungselement zwischen zwei Sicherheitsgläsern lagefest zu fixieren. Als Kleber kann beispielsweise ein Silyl-Modified-Polymer-Kleber (SMP-Kleber), ein Polyurethan-Kleber (PU-Kleber) oder ein Silikon-Kleber verwendet werden.

Bevorzugt ist es vorgesehen, dass eine erste Kleberschicht und eine zweite Kleberschicht zwischen zwei benachbart angeordneten Sicherheitsgläsern ausgebildet sind, welche voneinander unterschiedliche Klebeeigenschaften aufweisen. Durch das Aufbringen von zwei Kleberschichten mit unterschiedlichen Eigenschaften kann eine optimale Anpassung an die speziellen Anforderungen, beispielsweise hinsichtlich Abdichtung, Isoliereigenschaften, Dämpfungsgrad, Fixierung, welche die Kleberschicht erfüllen soll, erfolgen. Die einzelnen Kleberschichten können dadurch unterschiedliche Aufgaben innerhalb einer Glasscheibenmoduleinheit erfüllen. Die erste Kleberschicht kann vorzugsweise derart ausgebildet sein, dass sie die benachbart zueinander angeordneten Sicherheitsgläser durch ihre Klebkraft an den Glasoberflächen der Sicherheitsgläser zusammenhält und gleichzeitig ein Zusammenschieben der Sicherheitsgläser, so dass der Abstand zwischen diesen reduziert wird, verhindern kann. Die zweite Kleberschicht kann vorzugsweise derart ausgebildet sein, dass ein Eindringen von Feuchtigkeit zwischen zwei Sicherheitsgläsern und damit auch in die gesamte Glasscheibenmoduleinheit verhindert werden kann.

Vorzugsweise kann es vorgesehen sein, dass mindestens eine der zwei Kleberschichten eine diffusionsdichte Versiegelung ausbildet, welche ein Eindringen von Feuchtigkeit zwischen zwei benachbart angeordneten Sicherheitsgläsern verhindern kann. Um eine diffusionsdichte Versiegelung zu erreichen, kann das Material der Kleberschicht beispielsweise eine Butylgruppe aufweisen.

### Kurze Beschreibung der Zeichnungen

Weitere, die Erfindung verbessernde Maßnahmen werden nachstehend gemeinsam mit der Beschreibung mehrerer bevorzugter Ausführungsbeispiele der Erfindung anhand der Figuren näher dargestellt. Es zeigt:
Fig. 1 eine schematische Darstellung einer Glasscheibenmoduleinheit gemäß einer ersten Ausführungsform der Erfindung,
Fig. 2 eine schematische Darstellung einer Glasscheibenmoduleinheit gemäß einer zweiten Ausführungsform der Erfindung, und
Fig. 3 eine schematische Darstellung einer Glasscheibenmoduleinheit gemäß einer dritten Ausführungsform der Erfindung.

### Bevorzugte Ausführungsformen der Erfindung

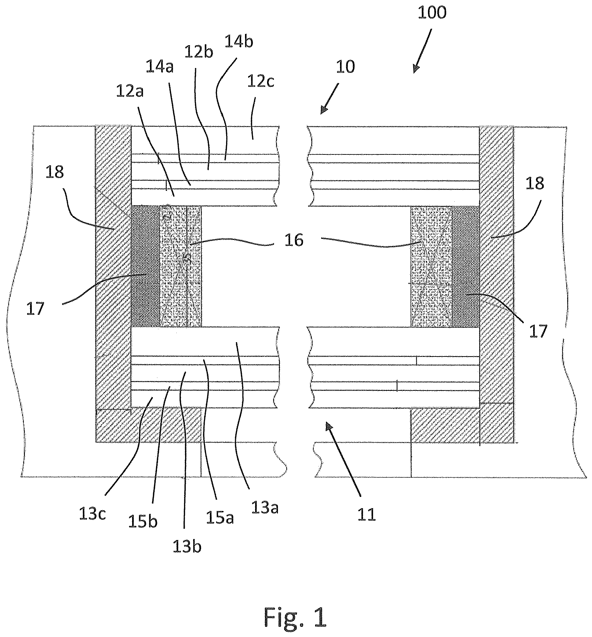

In Fig. 1 ist eine Glasscheibenmoduleinheit 100 gezeigt, welche ein erstes, außenseitig eines Wasserfahrzeugs anordbares Sicherheitsglas 10 und ein zweites, innenseitig eines Wasserfahrzeugs anordbares Sicherheitsglas 11 aufweist, wobei das erste Sicherheitsglas 10 und das zweite Sicherheitsglas beabstandet zueinander angeordnet sind. Sowohl das erste Sicherheitsglas 11 als auch das zweite Sicherheitsglas 12 sind hier als ein Sicherheitsverbundglas ausgebildet, welches jeweils drei Glasscheiben 12a, 12b, 12c, 13a, 13b, 13c mit jeweils einer zwischen zwei Glasscheiben 12a, 12b, 12c, 13a, 13b, 13c angeordneten Folie 14a, 14b, 15a, 15b aufweist. Alternativ zu der Folie 14a, 14b, 15a, 15b kann auch jeweils eine Gießharzschicht zwischen den Glasscheiben 12a, 12b, 12c, 13a, 13b, 13c angeordnet sein.

Die beiden Sicherheitsgläser 10, 11 weisen voneinander unterschiedliche Sicherheitseigenschaften auf, indem diese einen voneinander unterschiedlichen strukturellen Aufbau aufweisen. Das erste, außenseitig anordbare Sicherheitsglas 10 ist derart ausgebildet, dass es eine hohe Sicherheit gegenüber hydrostatischen Belastungen bietet. Das zweite, innenseitig anordbare Sicherheitsglas 11 ist derart ausgebildet, dass es eine hohe Sicherheit gegenüber Aufschlagbelastungen bietet. Sollte es durch besonders hohe hydrostatische Belastungen zu einem Bruch des außenseitig angeordneten ersten Sicherheitsglases 10 kommen, wird dadurch erreicht, dass das innenseitig angeordnete zweite Sicherheitsglas 11 nicht mit bricht und weiter den möglichen Schlagbelastungen, beispielsweise durch herumschwimmende Holzbalken, standhält.

Damit bei einem Bruch des ersten Sicherheitsglases 10 das zweite Sicherheitsglas 11 nicht mit beschädigt wird, was zum einen bereits durch die Ausbildung der Gläser 10, 11 als Sicherheitsgläser 10, 11 und nicht als normale Gläser erreicht wird, ist zudem ein Abstandshalter 16 zwischen den beiden Sicherheitsgläsern 10, 11 angeordnet, wobei der Abstandshalter 16 zudem bei der Montage bzw. Herstellung der Glasscheibenmoduleinheit 100 sicherstellen kann, dass ein bestimmter Abstand zwischen den beiden Sicherheitsgläsern 10, 11 eingehalten wird.

Der Abstandshalter 16 weist ein Trockenmittelmaterial auf, welches Feuchtigkeit aufnehmen und speichern kann.

Zudem sind bei der in Fig. 1 gezeigten Ausführungsform ein oder mehr Verstärkungselemente, hier nicht erkennbar, in dem Abstandshalter 16 integriert, indem das oder die Verstärkungselemente vollständig von dem Material des Abstandshalters 16 umschlossen sind. Durch die Integration von ein oder mehr Verstärkungselementen in den Abstandshalter 16 kann die Stabilität des Abstandshalters 16 erhöht werden.

Das Verstärkungselement ist vorzugsweise in Form einer flachen Metalleinlage, beispielsweise einer Edelstahleinlage, ausgebildet.

Der Abstandshalter 16 wird über eine Kleberschicht 17 zwischen den beiden Sicherheitsgläsern 10, 11 eingeklebt und damit verrutschsicher befestigt.

Die Kleberschicht 17, welche vorzugsweise elastische Eigenschaften aufweist und eine diffusionsdichte Versiegelung ausbildet, bildet eine Außenfläche der Glasscheibenmoduleinheit 100 aus, so dass der Abstandshalter 16 von der Kleberschicht 17 nach außen hin abgedeckt ist, so dass der Abstandshalter 16 innenseitig der Glasscheibenmoduleinheit 100 angeordnet ist. Die Kleberschicht 17 ist vorzugsweise aus einem SMP-Kleber ausgebildet.

Die einzelnen zuvor beschriebenen Elemente der Glasscheibenmoduleinheit 100 werden vorzugsweise in einem Werk zusammengefügt und anschließend wird die zusammengefügte Glasscheibenmoduleinheit 100 zu einem Montageort transportiert, wo die Glasscheibenmoduleinheit 100 als Ganzes, vorgefertigtes Element in einem Wasserfahrzeug montiert wird. Bereits während des Transportes der Glasscheibenmoduleinheit 100 hin zu dem Montageort kann durch die Kleberschicht 17 ein Schutz gegen das Eindringen von Feuchtigkeit in die vorgefertigte Glasscheibenmoduleinheit 100 sichergestellt werden.

Am Montageort wird die Glasscheibenmoduleinheit 100 bei der in Fig. 1 gezeigten Ausführungsform in eine an dem Wasserfahrzeug ausgebildete Öffnung über eine weitere Kleberschicht 18 eingeklebt.

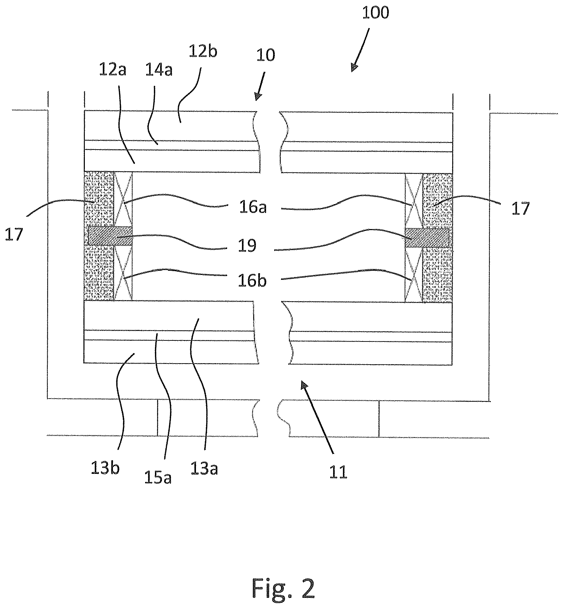

In Fig. 2 ist eine weitere Ausführungsform der Glasscheibenmoduleinheit 100 gezeigt, welche sich durch die Ausgestaltung der Sicherheitsgläser 10, 11 und des Abstandshalters 16 sowie der Anordnung des Verstärkungselements 19 von der in Fig. 1 gezeigten Ausführungsform unterscheidet.

Bei der in Fig. 2 gezeigten Ausgestaltung einer Glasscheibenmoduleinheit 100 sind die Sicherheitsgläser 10, 11 ebenfalls jeweils aus einem Sicherheitsverbundglas ausgebildet, welches jedoch nur jeweils zwei Glasscheiben 12a, 12b, 13a, 13b und eine zwischen den beiden Glasscheiben 12a, 12b, 13a, 13b angeordnete Folie 14a, 15a aufweist. Es ist jedoch auch möglich, ein wie in Fig. 1 gezeigtes Sicherheitsverbundglas oder auch Sicherheitsverbundgläser mit mehr als drei Glasscheiben und mehr als zwei Folien bei der in Fig. 2 gezeigten Ausführungsform zu verwenden.

Ferner sind bei der in Fig. 2 gezeigten Ausgestaltung zwei Abstandshalter 16a, 16b vorgesehen und das Verstärkungselement 19 ist als ein zu den Abstandshaltern 16 separat ausgebildetes Element vorgesehen, welches zwischen den beiden Abstandshaltern 16a, 16b angeordnet ist, so dass kein direkter Kontakt zwischen dem Verstärkungselement 19 und den Sicherheitsgläsern 10, 11 ausgebildet ist. Das Verstärkungselement 19 ragt mit einem Teilbereich des Verstärkungselements 19 in die Kleberschicht 17 hinein, so dass das Verstärkungselement 19 mittels der Kleberschicht 17 lagefixiert zwischen den beiden Abstandshaltern 16 und damit zwischen den Sicherheitsgläsern 10, 11 positioniert ist. Das Verstärkungselement 19 grenzt somit nicht unmittelbar an die Sicherheitsgläser 10, 11 an, sondern zwischen dem Verstärkungselement 19 und den Sicherheitsgläsern 10, 11 sind die Abstandshalter 16a, 16b bzw. ist die Kleberschicht 17 angeordnet.

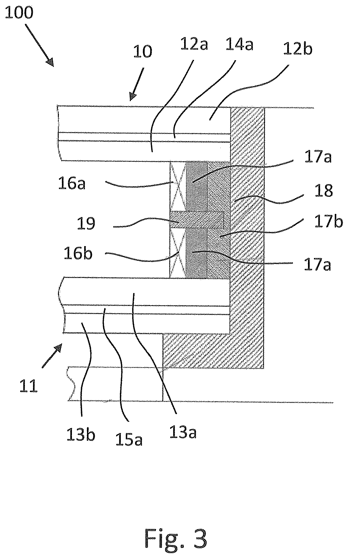

Die in Fig. 3 gezeigte Ausführungsform einer Glasscheibenmoduleinheit 100 ist ähnlich zu der in Fig. 2 gezeigten Ausführungsform einer Glasscheibenmoduleinheit 100 ausgebildet, wobei als Unterschied jedoch bei der in Fig. 3 gezeigten Ausführungsform eine erste Kleberschicht 17a und eine zweite Kleberschicht 17b zum Verkleben der Abstandshalter 16a, 16b und des Verstärkungselements 19 vorgesehen sind.

Die erste Kleberschicht 17a ist derart ausgebildet, dass sie die benachbart zueinander angeordneten Sicherheitsgläser 10, 11 durch ihre Klebkraft an den Glasoberflächen der Sicherheitsgläser 10, 11 zusammenhält und gleichzeitig ein Zusammenschieben der Sicherheitsgläser 10, 11, bei welchem der Abstand zwischen diesen reduziert werden würde, verhindern kann. Die zweite Kleberschicht 17b ist derart ausgebildet, dass sie eine diffusionsdichte Versiegelung ausbildet und damit ein Eindringen von Feuchtigkeit zwischen den zwei Sicherheitsgläsern 10, 11 und damit auch in die gesamte Glasscheibenmoduleinheit 100 verhindern kann. Die zweite Kleberschicht 17b bildet eine Außenfläche der Glasscheibenmoduleinheit 100 aus, wobei die erste Kleberschicht 17a zwischen der zweiten Kleberschicht 17b und den Abstandshaltern 16a, 16b angeordnet ist. Das Verstärkungselement 19 ragt sowohl in die erste Kleberschicht 17a als auch in die zweite Kleberschicht 17b hinein, so dass das Verstärkungselement 19 durch beide Kleberschichten 17a, 17b verklebt und damit in der Glasscheibenmoduleinheit 100 befestigt ist.

Bei der Herstellung der Glasscheibenmoduleinheit 100 wird zunächst auf das erste Sicherheitsglas 10 der erste Abstandshalter 16a aufgebracht. Anschließend wird das Verstärkungselement 19 auf dem Abstandshalter 16a positioniert und durch Einbringen der ersten Kleberschicht 17a in einen zwischen dem ersten Sicherheitsglas 10 und dem Verstärkungselement 19 ausgebildeten Spalt wird das Verstärkungselement 19 fixiert. Je nach Material muss die Kleberschicht 17a zunächst aushärten. Anschließend wird auf das Verstärkungselement 19 der zweite Abstandshalter 16b aufgebracht und das zweite Sicherheitsglas 11 wird nachfolgend auf dem zweiten Abstandshalter 16b positioniert. In den zwischen dem Verstärkungselement 19 und dem zweiten Sicherheitsglas 11 ausgebildeten Spalt wird dann wiederum Kleber der ersten Kleberschicht 17a eingebracht und eventuell ausgehärtet. Zur Fertigstellung der Glasscheibenmoduleinheit 100 wird zuletzt die zweite Kleberschicht 17b als umlaufende Versiegelung auf die erste Kleberschicht 17a aufgebracht.

Die Erfindung beschränkt sich in ihrer Ausführung nicht auf die vorstehend angegebenen bevorzugten Ausführungsbeispiele. Vielmehr ist eine Anzahl von Varianten denkbar, welche von den dargestellten Lösungen auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten, räumliche Anordnungen und Verfahrensschritte, können sowohl für sich als auch in den verschiedensten Kombinationen erfindungswesentlich sein.

## Patentansprüche

1. Glasscheibenmoduleinheit (100) zum Einsatz in einem Wasserfahrzeug mit mindestens zwei Sicherheitsgläsern (10, 11), wobei mindestens ein Sicherheitsglas (10) außenseitig des Wasserfahrzeugs anordbar ist und mindestens ein Sicherheitsglas (11) innenseitig des Wasserfahrzeuges anordbar ist, und mit mindestens einem zwischen zwei benachbart angeordneten Sicherheitsgläsern (10, 11) angeordneten Abstandshalter (16, 16a, 16b), wobei das außenseitig des Wasserfahrzeugs angeordnete Sicherheitsglas (10) Sicherheitseigenschaften aufweist, welche sich von den Sicherheitseigenschaften des innenseitig des Wasserfahrzeugs angeordneten Sicherheitsglases (11) unterscheiden, wobei das außenseitig des Wasserfahrzeugs angeordnete Sicherheitsglas (10) Sicherheitseigenschaften gegen hydrostatische Belastungen aufweist und dass das innenseitig des Wasserfahrzeugs angeordnete Sicherheitsglas (11) Sicherheitseigenschaften gegen Aufschlagbelastungen aufweist, und dass zwischen zwei benachbart angeordneten Sicherheitsgläsern (10, 11) mindestens ein Verstärkungselement (19) angeordnet ist, wobei das Verstärkungselement (19) aus einem Metallmaterial oder einem Karbonmaterial ausgebildet ist, wobei das Verstärkungselement (19) als ein zu dem Abstandshalter (16, 16a, 16b) separat angeordnetes Element zwischen zwei Abstandshaltern (16, 16a, 16b) angeordnet ist, so dass kein direkter Kontakt zwischen dem Verstärkungselement (19) und den Sicherheitsgläsern (10, 11) ausgebildet ist.

2. Glasscheibenmoduleinheit (100) nach Anspruch 1, **dadurch gekennzeichnet, dass** die Sicherheitsgläser (10, 11) als ein Einscheibensicherheitsglas oder als ein Sicherheitsverbundglas ausgebildet sind.

3. Glasscheibenmoduleinheit (100) nach Anspruch 1 oder 2, **dadurch gekennzeichnet, dass** der Abstandshalter (16, 16a, 16b) ein Trockenmittelmaterial aufweist.

4. Glasscheibenmoduleinheit (100) nach einem der vorgenannten Ansprüche, **dadurch gekennzeichnet, dass** das Verstärkungselement (19) aus einem Edelstahlmaterial ausgebildet ist.

5. Glasscheibenmoduleinheit (100) nach einem der vorgenannten Ansprüche, **dadurch gekennzeichnet, dass** zwischen zwei benachbart angeordneten Sicherheitsgläsern (10, 11) mindestens eine Kleberschicht (17, 17a, 17b) ausgebildet ist.

6. Glasscheibenmoduleinheit (100) nach Anspruch 5, **dadurch gekennzeichnet, dass** eine erste Kleberschicht (17a) und eine zweite Kleberschicht (17b) zwischen zwei benachbart angeordneten Sicherheitsgläsern (10, 11) ausgebildet sind, welche voneinander unterschiedliche Klebeeigenschaften aufweisen.

7. Glasscheibenmoduleinheit (100) nach Anspruch 6, **dadurch gekennzeichnet, dass** mindestens eine der zwei Kleberschichten (17a, 17b) eine diffusionsdichte Versiegelung ausbildet.

## Claims

1. Glass pane module unit (100) for use in a watercraft having at least two safety glasses (10, 11), wherein at least one safety glass (10) can be arranged on the outside of the watercraft and at least one safety glass (11) can be arranged on the inside of the watercraft, and having at least one spacer (16, 16a, 16b) arranged between two adjacently arranged safety glasses (10, 11), wherein the safety glass (10) arranged on the outside of the watercraft has safety properties which differ from the safety properties of the safety glass (11) arranged on the inside of the watercraft, wherein the safety glass (10) arranged on the outside of the watercraft has safety properties against hydrostatic loads and the safety glass (11) arranged on the inside of the watercraft has safety properties against impact loads, and at least one reinforcing element (19) is arranged between two adjacently arranged safety glasses (10, 11), wherein the reinforcing element (19) is formed from a metal material or a carbon material, wherein the reinforcing element (19) is arranged between two spacers (16, 16a, 16b) as an element arranged separately from the spacer (16, 16a, 16b), so that no direct contact is established between the reinforcing element (19) and the safety glasses (10, 11) .

2. Glass pane module unit (100) according to claim 1, **characterized in that** the safety glasses (10, 11) are designed as a single-pane safety glass or as a safety laminated glass.

3. Glass pane module unit (100) according to one of claims 1 to 2, **characterized in that** the spacer (16, 16a, 16b) has a desiccant material.

4. Glass pane module unit (100) according to one of the preceding claims, **characterized in that** the reinforcing element (19) is formed from a stainless steel material.

5. Glass pane module unit (100) according to one of the preceding claims, **characterized in that** at least one adhesive layer (17, 17a, 17b) is formed between two adjacently arranged safety glasses (10, 11).

6. Glass pane module unit (100) according to claim 5, **characterized in that** a first adhesive layer (17a) and a second adhesive layer (17b) are formed between two adjacently arranged safety glasses (10, 11) which have mutually different adhesive properties.

7. Glass pane module unit (100) according to claim 6, **characterized in that** at least one of the two adhesive layers (17a, 17b) forms a diffusion-tight seal.

## Revendications

1. Unité de module de vitre (100) destinée à être utilisée dans un bateau comprenant au moins deux verres de sécurité (10, 11), dans laquelle au moins un verre de sécurité (10) peut être agencé à l'extérieur du bateau et au moins un verre de sécurité (11) peut être agencé à l'intérieur du bateau, et comprenant au moins un écarteur (16, 16a, 16b) agencé entre deux verres de sécurité (10, 11) disposés adjacents, dans laquelle le verre de sécurité (10) agencé à l'extérieur du bateau présente des propriétés de sécurité qui se différencient des propriétés de sécurité du verre de sécurité (11) agencé à l'intérieur du bateau, dans laquelle le verre de sécurité (10) agencé à l'extérieur du bateau présente des propriétés de sécurité contre les charges hydrostatiques et que le verre de sécurité (11) agencé à l'intérieur du bateau présente des propriétés de sécurité contre les chocs, et qu'au moins un élément de renfort (19) est disposé entre deux verres de sécurité (10, 11) disposés adjacents, dans laquelle l'élément de renfort (19) est formé d'un matériau métallique ou d'un matériau carboné, dans laquelle l'élément de renfort (19) est disposé entre deux écarteurs (16, 16a, 16b) en tant qu'un élément disposé séparément par rapport à l'écarteur (16, 16a, 16b), de sorte qu'il n'y a aucun contact direct entre l'élément de renfort (19) et les verres de sécurité (10, 11).

2. Unité de module de vitre (100) selon la revendication 1, **caractérisé en ce que** les verres de sécurité (10, 11) sont conçus en tant qu'un verre de sécurité unique ou en tant qu'un verre de sécurité composite.

3. Unité de module de vitre (100) selon la revendication 1 ou 2, **caractérisé en ce que** l'écarteur (16, 16a, 16b) présente un matériau central sec.

4. Unité de module de vitre (100) selon l'une des revendications précédentes, **caractérisé en ce que** l'élément de renfort (19) est constitué d'un matériau en acier inox.

5. Unité de module de vitre (100) selon l'une des revendications précédentes, **caractérisé en ce qu'**au moins une couche de colle (17, 17a, 17b) est formée entre deux verres de sécurité (10, 11) disposés adjacents.

6. Unité de module de vitre (100) selon la revendication 5, **caractérisé en ce qu'**une première couche de colle (17a) et une seconde couche de colle (17b) sont formées entre deux verres de sécurité (10, 11) disposés adjacents, lesquelles présentent des propriétés de collage différentes entre elles.

7. Unité de module de vitre (100) selon la revendication 6, **caractérisé en ce qu'**au moins une des deux couches de colle (17a, 17b) forme un scellement étanche à la diffusion.
